Europäisches Patentamt

European Patent Office

Office européen des brevets

(19)

(11) **EP 0 972 363 B1**

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(51) Int Cl.⁷: **H04B 10/08**

(86) Internationale Anmeldenummer:
**PCT/DE98/00925**

(21) Anmeldenummer: **98928107.6**

(22) Anmeldetag: **01.04.1998**

(87) Internationale Veröffentlichungsnummer:
**WO 98/46038 (15.10.1998 Gazette 1998/41)**

(54) **VERFAHREN ZUR ÜBERTRAGUNG VON ZUSATZDATENSIGNALEN UND EINEM NUTZDATENSIGNAL ÜBER OPTISCHE VERBINDUNGEN**

METHOD FOR TRANSMITTING ADDITIONAL DATA SIGNALS AND A USEFUL DATA SIGNAL BY MEANS OF OPTICAL LINKS

PROCEDE DE TRANSMISSION DE SIGNAUX DE DONNEES SUPPLEMENTAIRES ET D'UN SIGNAL DE DONNEES UTILISATEUR PAR L'INTERMEDIAIRE DE LIAISONS OPTIQUES

(84) Benannte Vertragsstaaten:
**DE ES FR GB IT**

(30) Priorität: **04.04.1997 DE 19713952**

(43) Veröffentlichungstag der Anmeldung:
**19.01.2000 Patentblatt 2000/03**

(73) Patentinhaber: **SIEMENS AKTIENGESELLSCHAFT**
**80333 München (DE)**

(72) Erfinder:
• **BURGMEIER, Jürgen**
  **D-81479 München (DE)**
• **BISCHOFF, Mathias**
  **D-81375 München (DE)**

(56) Entgegenhaltungen:
**EP-A- 0 348 167       EP-A- 0 735 705**
**DE-A- 3 522 130**

EP 0 972 363 B1

**Beschreibung**

In Kommunikationsnetzen mit nicht permanenten Verbindungen ist jede Verbindung mit einer Kennung versehen, um feststellen zu können, ob durch Fehler in den Vermittlungsstellen Fehlverbindungen auftreten. Diese Überprüfung ist besonders bei semipermanenten Verbindungen erforderlich, wie sie durch Crossconnectoren (Netzknoten) beispielsweise bei der synchronen digitalen Hierarchie SDH hergestellt werden. Diese Kennungen müssen auch bei transparenten volloptischen Netzen übertragen werden, bei denen ein Zugriff auf im Übertragsrahmen des Signals mittransportierte Zusatzinformationen nicht möglich ist, die in den existierenden Netzen die Verbindungskennung, beispielsweise die Quellenkennung, tragen.

Aus der deutschen Offenlegungsschrift DE 3 522 130 A ist ein Verfahren zur Übertragung eines Zusatzkanals bei optischen Übertragungssystemen bekannt, der durch ein mehrfaches umcodieren der Nutzdaten ohne zusätzlichen Bandbreitenbedarf geschaffen wird. Zur Wiedergewinnung der Nutzdaten ist dann jedoch eine entsprechende Vorrichtung vorzusehen.

Eine weitere Lösung besteht in der Übertragung der Kennung in einem separaten Zusatzkanal, der in allen Netzelementen parallel zur überwachenden Verbindung geführt wird. Aus der Europäischen Patentanmeldung EP 0 735 705 A1 ist ein Servicekanal bekannt, der mittels einer unterschiedlichen Wellenlänge übertragen wird. Hierzu ist zusätzlicher Frequenzbedarf erforderlich. Der Nachteil dieses Verfahrens liegt darin, nicht ausgeschlossen werden kann, daß aufgrund eines Fehlers in einem Netzelement, beispielsweise des Crossconnectors, der die Kennung übertragende Zusatzkanal und das Nutzsignal getrennt oder falsch zugeordnet werden. Damit ist eine sichere Erkennung einer Fehlverbindung aber nicht mehr möglich. Auch kann eine Fehlverbindung vorgetäuscht werden.

Das Problem besteht also darin, daß bei optischen Verbindungen eine sichere Zuordnung des Nutzdatensignals und des Zusatzdatensignals erforderlich ist. Hierzu muß die in der EP 0 735 705 beschriebene Übertragung der Zusatzdaten modifiziert werden.

Diese Aufgabe wird durch das im Anspruch 1 angegebene Verfahren gelöst.

Dadurch, daß sowohl die Nutzdaten als auch die Zusatzdaten im . selben Kanal übertragen werden, ist die Zuordnung stets gewährleistet. Die Übertragung im selben Kanal ist dadurch möglich, daß das Zusatzdatensignal zunächst in Codefolgen umgesetzt wird, die dann dem Nutzdatensignal mit kleiner Amplitude überlagert werden.

Die Verwendung eines in ein höheres Frequenzband umgesetzten Codesignals kann vorteilhaft sein, da hierdurch extrem niederfrequente Spektralanteile vermieden werden. Probleme im unteren Frequenzbereich von Faserverstärkern werden bei einem geträgerten Zusatzsignal vermieden.

In jedem Fall führt die Überlagerung des Nutzdatensignals durch das Zusatzdatensignal nur zu einer geringfügigen Verschlechterung des Störabstandes, das Zusatzdatensignal wirkt sich wie eine geringfügige Erhöhung des Kanalrauschens aus. Auch bei insgesamt durch die Übertragung bedingtem schlechten Signal-Rauschleistungsverhältnis kann das Zusatzdatensignal noch detektiert werden. Wenn jedem Bit des Zusatzdatensignals mehrere aufeinanderfolgende Codefolgen zugeordnet werden, wird die Detektierbarkeit weiter verbessert.

Vorteilhaft ist es, wenn das Zusatzdatensignal ein binäres Signal ist, da dieses den größten Rauschabstand aufweist und die beiden logischen Zustände als invertierte Codefolgen übertragen werden können.

Zweckmäßig ist auch, wenn eine Überlagerung nur bei den Einzuständen des Nutzdatensignals erfolgt, wenn dieses als getastete Modulation übertragen wird. Dies ist schaltungsmäßig einfacher zu realisieren.

Das Verfahren kann grundsätzlich bei allen Modulationsarten, beispielsweise bei Phasenmodulation, angewendet werden.

Besonders geeignet ist das Verfahren zur Übertragung von Kennungen bzw. Adressen bei optischen Übertragungssystemen. Das Zusatzdatensignal kann ohne Eingriff in das Nutzdatensignal überprüft werden, so daß die Richtigkeit einer Verbindung ständig überprüft werden kann. Eine bestimmte Kennung, d. h. eine bestimmte 1,0-Folge kann ununterbrochen wiederholt übertragen werden, wodurch die Detektionszeit minimiert wird. Es ist jedoch auch eine Übertragung im Zeitmultiplexbetrieb mit weiteren Zusatzdaten möglich. Darüber hinaus kann das Verfahren selbstverständlich auch für die Übertragung von beliebigen Zusatzsignalen verwendet werden.

Die Erfindung wird nun anhand von zwei Ausführungsbeispielen näher beschrieben.

Es zeigen

Figur 1   ein Prinzipschaltbild zur Übertragung eines Zusatzdatensignals,

Figur 2   ein Zeitdiagramm mit den verwendeten Codefolgen und dem Nutzdatensignal und

Figur 3   eine Variante der Anordnung nach Figur 1.

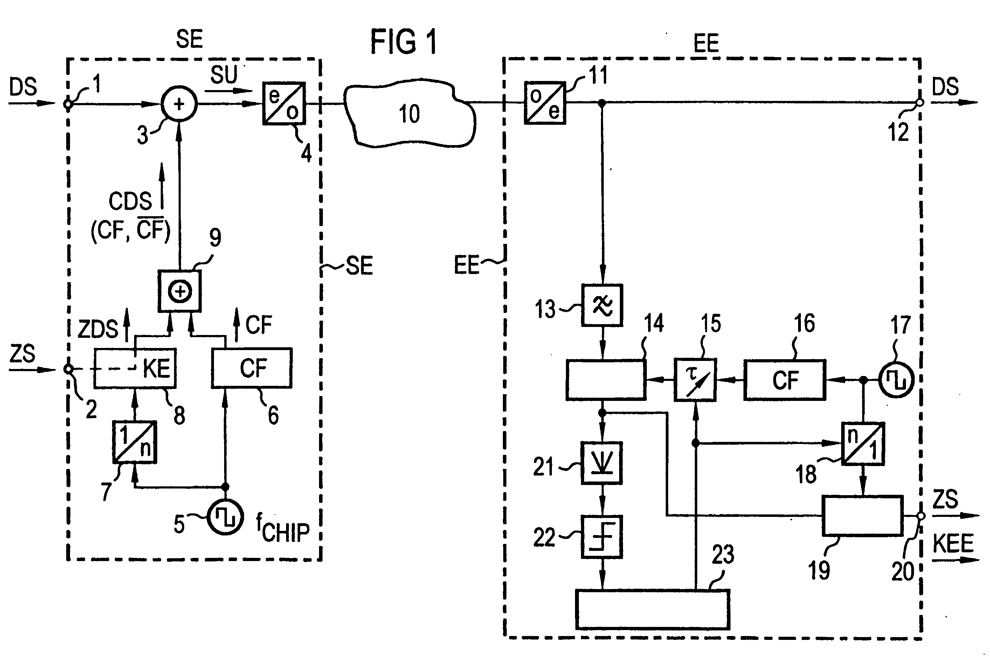

Das Prinzipschaltbild **Figur 1** zeigt eine Sendeeinrichtung SE, die über ein optisches Netz 10 mit einer Empfangseinrichtung EE verbunden ist. Über einen Dateneingang 1 wird ein Nutzdatensignal DS, das auch aus mehreren digitalen Datensignalen bestehen kann, einem Addierer 3 zugeführt, dessen zweitem Eingang ein codiertes Zusatzdatensignal CDS Zugeführt wird. Den beiden logischen Zuständen des binären codierten Zusatzdatensignals CDS sind zwei Codefolgen CF und $\overline{\text{CF}}$ zugeordnet, die mit wesentlich kleinerer Amplitude (ca. 0,1 bis 0,01 der Amplitude des Nutzdatensignals) dem Nutzdatensignal DS überlagert werden. Das so erzeugte Summensignal SU wird nach der Umsetzung in einem elektrooptischen Wandler über ein optisches Netz 10 übertragen.

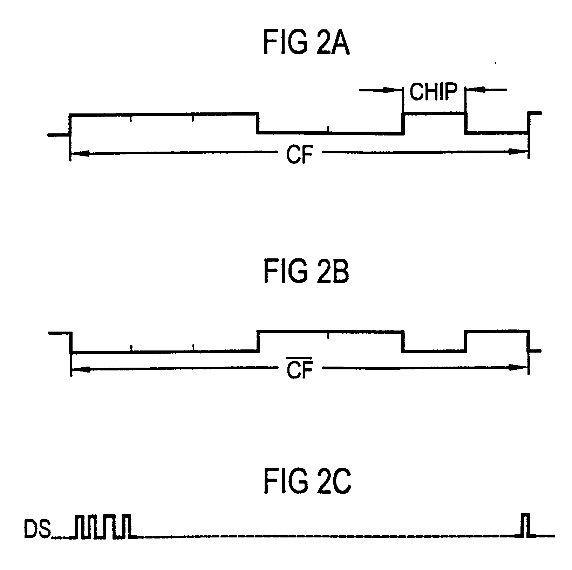

Die Codefolge CF wird von einem Codefolgengenerator 6 erzeugt. Sie setzt sich aus mehreren sogenannten Chips CHIP (logischen Zuständen) zusammen, die jeweils eine wesentlich längere Periodendauer als die einzelnen Bits des Nutzdatensignals aufweisen (beispielsweise 10- bis 100fach). Mehrere dieser Chips bilden die Codefolge CF (Figur 2, a). Bei binären Zusatzdaten wird beispielsweise der logischen 1 diese Codefolge zugeordnet, während die logische 0 durch die invertierte Codefolge $\overline{CF}$ repräsentiert wird (Figur 2, b). In der Regel werden mehrere aufeinanderfolgende Codefolgen einem Bit der Zusatzdaten zugeordnet. Dies ist, wie die Chiplänge, eine von den Übertragungsbedingungen und der relativen Amplitude des Zusatzdatensignals abhängig. Die Codefolge CF soll eine möglichst impulsförmige Autokorrelationsfunktion aufweisen, um im Empfänger eine sichere Detektion mittels Kreuzkorrelation zu ermöglichen.

Der Chiptakt mit der Frequenz $f_{CHIP}$ wird von einem ersten Frequenzgenerator 5 erzeugt oder von einem existierenden Takt abgeleitet. Der Bittakt für das Zusatzdatensignal wird von der Chipfrequenz durch einen ersten Frequenzteiler 7 abgeleitet und einem Kennungsgenerator 8 zugeführt.

Die von diesem erzeugte Kennung entspricht beispielsweise einer Adresse, die als Zusatzdatensignal ZDS über ein EXCLUSIVE-NOR-Gatter 9 die Codefolgen bestimmt (unverändert bei jeder logischen 1 oder umgepolt bei jeder logischen 0).

Zu ergänzen ist noch, daß statt der Kennung KE auch ein externes Zusatzsignal ZS übertragen werden kann, das anstelle der Kennung dem EXCLUSIVE-NOR-Gatter 9 zugeführt wird. Dies kann auch Informationen über die Art der übertragenen Nutzdatensignale, z.B. ATM, enthalten. Selbstverständlich ist auch ein Übertragen beider Signale oder mehrerer Signale im Zeitmultiplexbetrieb möglich.

Anstelle der Kennung können auch beliebige Zusatzdaten ZS übertragen werden, die über einen Zusatzdateneingang 2 eingespeist werden können. Dies kann auch im Zeitmultiplexbetrieb erfolgen.

Im Empfänger EE wird das empfangene optische Signal in einem optoelektrischen Wandler 11 wieder in das (wenn man Störungen auf der Übertragungsstrecke unberücksichtigt läßt) ursprüngliche Summensignal SU umgesetzt. Dieses entspricht einem leicht verrauschten Nutzdatensignal DS und wird als solches am Datenausgang 12 abgegeben; um weiterverarbeitet zu werden.

Aus dem Summensignal wird durch einen Tiefpaß 13 das Zusatzdatensignal, dessen Bits ja aus den Codefolgen CF und $\overline{CF}$ bestehen, abgespalten. Ein Korrelator 14 vergleicht die Codefolgen mit der von einem zweiten Codefolgengenerator 16 erzeugten Codefolge, die mit der sendeseitig erzeugten Codefolge übereinstimmt und dieselbe Chipfrequenz, die ein zweiter Frequenzgenerator 17 erzeugt, aufweist. Die vom Korrelator abgegebenen Signale werden durch einen Gleichrichter 21 (oder eine entsprechende Schaltung) betragsgemäß ausgewertet und über einen Schwellwertentscheider 22 einer Steuerung 23 zugeführt, die über ein Laufzeitglied 15 (oder eine entsprechende Steuerung des Codefolgengenerators 16) für einen Gleichlauf der Codefolgen und eines zweiten Frequenzteilers 18 sorgt, der einen Zusatzdaten-/Kennungsdetektor 19 steuert. Der Schwellwert kann im eingeschwungenen Zustand dem maximalen bzw. minimalen Korrelationswert entsprechen.

Anstelle des Regelkreises kann der Korrelator als Schieberegister ausgebildet werden, dessen gespeicherte Information mit den Codefolgen CF und $\overline{CF}$ verglichen wird. Durch den Vergleich wird festgestellt, ob eine der beiden Codefolgen empfangen wurde.

Der Zusatzdaten-/Kennungsdetektor 19 wertet die vom Korrelator abgegebene Information aus und setzt sie entweder in die Zusatzinformation ZS um oder bewertet eine längere Bitfolgen, um bei Empfang einer bestimmten Kennung ein Bestätigungssignal KEE am Ausgang 20 abzugeben.

Zu ergänzen ist noch, daß die Kennung auch mit Hilfe von unterschiedlichen Codefolgen gebildet werden kann. Auch können anstelle von einzelnen Bits auch Bitkombinationen in verschiedene Codefolgen umgesetzt werden, beispielsweise vier Bitpaare 00, 01, 10 und 11 in vier Codefolgen, die dem Nutzdatensignal überlagert werden.

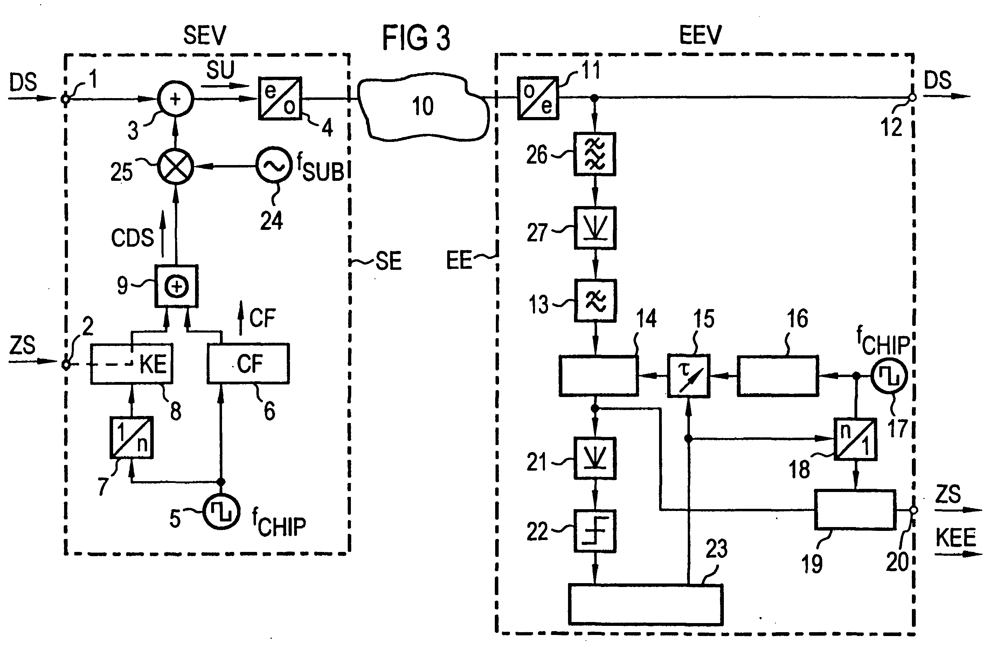

**Figur 3** zeigt eine weitgehend Figur 1 entsprechende Anordnung, bei der jedoch die durch das Zusatzdatensignal erzeugten Codefolgen CF, $\overline{CF}$ zusätzlich in einen Mischer 25 mit Hilfe eines Subträgers mit der Frequenz $f_{SUB}$ in ein gewünschtes Frequenzband umgesetzt werden, das übertragungstechnische Vorteile bietet.

Die Empfangseinrichtung muß dann eine entsprechende Filtereinrichtung, den Bandpaß 26, und einen Detektor 27 zur Demodulation des Zusatzdatensignals aufweisen.

Bei diesem Verfahren ist es möglich, verschiedene Zusatzdatensignale in verschiedenen Zusatzfrequenzbändern zu übertragen.

**Patentansprüche**

1. Verfahren zur Übertragung von Zusatzdatensignalen (ZDS) und einem Nutzdatensignal (DS) in optischen Netzen, **dadurch gekennzeichnet,**

    **daß** sendeseitig das Zusatzdatensignal (ZDS) in ein aus Codefolgen (CF, $\overline{CF}$) bestehendes codiertes Zusatzdatensignal (CDS) umgesetzt wird, wobei jede Codefolge (CF, $\overline{CF}$) aus mehreren Chips (CHIP) besteht und eine geringere Chipfrequenz ($f_{CHIP}$) als die Bitfrequenz des Nutzdatensignals (DS) aufweist,
**daß** das codierte Zusatzdatensignal (CDS), das eine geringere Amplitude als das Nutzdatensignal (DS) aufweist, dem Nutzdatensignal (DS) überlagert wird und
**daß** das so gebildete Summensignal (SU) übertragen wird,
**daß** empfangsseitig eine Abtrennung des codierten Zusatzdatensignals (CDS) vom Nutzdatensignal (DS) erfolgt,
**daß** ein Vergleich des codierten Zusatzdatensignals (CDS) mit den gültigen Codefolgen (CF, $\overline{CF}$) durchgeführt wird und
**daß** eine Rückumsetzung in das Zusatzdatensignal (ZDS) erfolgt, das als Zusatzsignal (ZS) ausgegeben wird oder das ausgewertet und als Bestätigungssignal (KEE) ausgegeben wird.

2. Verfahren nach Anspruch 1,
**dadurch gekennzeichnet,**

**daß** sendeseitig das codierte Zusatzdatensignal (CDS) in ein höheres Frequenzband umgesetzt wird und
**daß** empfangsseitig das codierte Zusatzdatensignal (CDS) in das Zusatzdatensignal (ZDS) rückumgesetzt wird und daß empfangsseitig das codierte Zusatzdatensignal (CDS) aus dem Summensignal (SU) herausgefiltert wird und durch Demodulation in das Basisband rückumgesetzt wird.

3. Verfahren nach einem der vorhergehenden Ansprüche,
**dadurch gekennzeichnet,**
**daß** als Zusatzdatensignal (ZDS) ein binäres Signal übertragen wird, dessen einem logischen Zustand, z. B. der logischen 1, eine aus mehreren Chips (CHIP) bestehende erste Codefolge (CF) zugeordnet wird und dem anderen logischen Zustand eine hierzu invertierte Codefolge ($\overline{CF}$) zugeordnet wird.

4. Verfahren nach einem der vorhergehenden Ansprüche,
**dadurch gekennzeichnet,**
**daß** einem Bit des Zusatzdatensignals (ZDS) mehrere aufeinanderfolgende Codefolgen (CF, $\overline{CF}$) zugeordnet sind.

5. Verfahren nach einem der vorhergehenden Ansprüche,
**dadurch gekennzeichnet,**
**daß** das Nutzdatensignal (DS) als Ein-Aus-Tastung übertragen wird und daß das Zusatzdatensignal (ZDS) dem Nutzdatensignal (DS) mit einer wesentlich geringeren Amplitude überlagert wird.

6. Verfahren nach Anspruch 5,
**dadurch gekennzeichnet, daß** die Überlagerung nur bei einem "Ein"-getastetem Nutzdatensignal (DS) erfolgt.

7. Verfahren nach einem der vorhergehenden Ansprüche,
**dadurch gekennzeichnet, daß** als Zusatzdatensignal (ZDS) eine aus mehreren Bits bestehende Kennung (KE) übertragen wird.

8. Verfahren nach einem der vorhergehenden Ansprüche,
**dadurch gekennzeichnet, daß** unterschiedliche Codefolgen für unterschiedliche Kennungen übertragen werden.

9. Verfahren nach Anspruch 7 oder 8,
**dadurch gekennzeichnet, daß** die Kennung (KE) Information über die Quelle und/oder die Senke und/oder die Art des Nutzdatensignals (DS) enthält.

10. Verfahren nach einem der Ansprüche 1 bis 6,
**dadurch gekennzeichnet, daß** als Zusatzdatensignal (ZDS) ein externes Zusatzsignal (ZS) übertragen wird.

11. Verfahren nach Anspruch 7 oder 8 und Anspruch 9,
**dadurch gekennzeichnet, daß** die Kennung (KE) und das externe Zusatzsignal (ZS) im Zeitmultiplexverfahren übertragen werden.

12. Verfahren nach einem der vorliegenden Ansprüche,
**dadurch gekennzeichnet, daß** mehrere Zuatzdatensignale (ZDS) im Frequenzmultiplexverfahren mit dem Nutzdatensignal (DS) im selben Kanal übertragen werden.

**Claims**

1. Method for transmitting additional data signals (ZDS) and a useful data signal (DS) in optical networks, **characterized in that**, at the transmission end, the additional data signal (ZDS) is converted into a coded additional data signal (CDF) comprising code sequences (CF, $\overline{CF}$), each code sequence (CF, $\overline{CF}$) comprising a plurality of chips (CHIP) and having a lower chip frequency ($f_{CHIP}$) than the bit frequency of the useful data signal (DS), **in that** the coded additional data signal (CDS), which has a smaller amplitude than the useful data signal (DS), is superimposed on the useful data signal (DS), and **in that** the summed signal (SU) thus formed is transmitted, **in that** the coded additional data signal (CDS) is separated from the useful data signal (DS) at the reception end, **in that** the coded additional data signal (CDS) is compared with the valid code sequences (CF, $\overline{CF}$) and **in that** reconversion takes place into the additional data signal (ZDS), which is output as an additional signal (ZS) or which is evaluated and output as an actuation signal (KEE).

2. Method according to Claim 1, **characterized in that**, at the transmission end, the coded additional data signal (CDS) is converted to a higher frequency band, and **in that**, at the reception end, the coded additional data signal (CDS) is reconverted into the additional data signal (ZDS), and **in that**, at the reception end, the coded additional data signal (CDS) is filtered out of the summed signal (SU) and is reconverted to the baseband by demodulation.

3. Method according to one of the preceding claims, **characterized in that** the additional data signal (ZDS) transmitted is a binary signal whose one logic state, e.g. logic 1, is allocated a first code sequence (CF) comprising a plurality of chips (CHIP) and the other logic state is allocated a code sequence ($\overline{CF}$) which is the inverse of this.

4. Method according to one of the preceding claims, **characterized in that** one bit of the additional data signal (ZDS) has a plurality of successive code sequences (CF, $\overline{CF}$) allocated to it.

5. Method according to one of the preceding claims, **characterized in that** the useful data signal (DS) is transmitted by way of on/off keying and **in that** the additional data signal (ZDS) is superimposed on the useful data signal (DS) with an essentially smaller amplitude.

6. Method according to Claim 5, **characterized in that** the superimposition takes place only with a useful data signal (DS) keyed "on".

7. Method according to one of the preceding claims, **characterized in that** the additional data signal (ZDS) transmitted is an identifier (KE) comprising a plurality of bits.

8. Method according to one of the preceding claims, **characterized in that** different code sequences are transmitted for different identifiers.

9. Method according to Claim 7 or 8, **characterized in that** the identifier (KE) contains information about the source and/or the sink and/or the type of the useful data signal (DS).

10. Method according to one of Claims 1 to 6, **characterized in that** the useful data signal (ZDS) transmitted is an external additional signal (ZS).

11. Method according to Claim 7 or 8 and Claim 9, **characterized in that** the identifier (KE) and the external additional signal (ZS) are transmitted using time-division multiplexing.

12. Method according to one of the preceding claims, **characterized in that** a plurality of additional data signals (ZDS) are transmitted using frequency-division multiplexing with the useful data signal (DS) on the same channel.


## Revendications

1. Procédé destiné à la transmission, dans des réseaux optiques, de signaux de données auxiliaires (ZDS) et un signal de données utiles (DS) **caractérisé par le fait**

**que**, du côté émission, le signal des données auxiliaires (ZDS) est converti en un signal des données auxiliaires codé (CDS), composé de séquences de codes (CF, $\overline{CF}$), chaque séquence de code (CF, $\overline{CF}$) se composant de plusieurs chips (CHIP) et ayant une fréquence de chip ($f_{CHIP}$) plus faible que la fréquence de bits du signal des données utiles (DS),
**que** le signal des données auxiliaires codé (CDS), qui a une amplitude plus faible que le signal des données utiles (DS), est superposé au signal des données utiles (DS) et
**que** le signal de somme (SU) ainsi formé est transmis,
**que**, du côté réception, une séparation entre le signal des données auxiliaires codé (CDS) et le signal des données utiles (DS) a lieu,
**qu'**on effectue une comparaison du signal des données auxiliaires codé (CDS) avec les séquences de codes (CF, $\overline{CF}$) valables et
**qu'**on effectue une reconversion dans le signal des données auxiliaires (ZDS), qui est émis comme signal supplémentaire (ZS) ou qui est analysé et émis comme signal de confirmation (KEE).

2. Procédé selon la revendication 1 **caractérisé par le fait**

**que**, du côté émission, le signal des données auxiliaires codé (CDS) est transposé dans une bande supérieure de fréquences et
**que**, du côté réception, le signal des données auxiliaires codé (CDS) est reconverti en un signal des données auxiliaires (ZDS) et que, du côté réception, le signal des données auxiliaires codé (CDS) est filtré du signal de somme (SU) et reconvertit par démodulation dans la bande de base.

**3.** Procédé selon l'une des revendications précédentes
**caractérisé par le fait**
qu'on transmet, en tant que signal des données auxiliaires (ZDS), un signal binaire, une première séquence de codes composée de plusieurs chips (CHIP) étant affectée à l'un des états logiques, par exemple, au 1 logique, et une séquence de codes ($\overline{CF}$), inverse à la première, étant affectée à l'autre état logique.

**4.** Procédé selon l'une des revendications précédentes
**caractérisé par le fait**
que plusieurs séquences de code successives (CF, $\overline{CF}$) sont affectées à un bit du signal des données auxiliaires (ZDS).

**5.** Procédé selon l'une des revendications précédentes
**caractérisé, par le fait**
que le signal des données utiles (DS) est transmis comme modulation tout ou rien et que le signal des données auxiliaires (ZDS) est superposé au signal des données utiles (DS) avec une amplitude nettement plus faible.

**6.** Procédé selon la revendication 5
**caractérisé par le fait**
que la superposition n'a lieu que pour un signal des données utiles (DS) modulé "tout".

**7.** Procédé selon l'une des revendications précédentes
**caractérisé par le fait**
qu'une identification (KE) composée de plusieurs bits est transmise en tant que signal de données auxiliaires (ZDS).

**8.** Procédé selon l'une des revendications précédentes
**caractérisé par le fait**
que des séquences de code différentes sont transmises pour des identifications différentes.

**9.** Procédé selon la revendication 7 ou 8
**caractérisé par le fait**
que l'identification (KE) renferme des informations sur la source et/ou le collecteur et/ou le genre du signal des données utiles (DS).

**10.** Procédé selon l'une des revendications 1 à 6
**caractérisé par le fait**
qu'un signal auxiliaire externe (ZS) est transmis en tant que signal de données auxiliaires (ZDS).

**11.** Procédé selon la revendications 7 ou 8 et la revendication 9

**caractérisé par le fait**
que l'identification (KE) et le signal auxiliaire externe (ZS) sont transmis en mode multiplex temporel.

**12.** Procédé selon l'une des présentes revendications
**caractérisé par le fait**
que plusieurs signaux de données auxiliaires (ZDS) sont transmis dans le même canal, en mode multiplex temporel, avec le signal des données utiles (DS).

FIG 1

## FIG 2A

CHIP

CF

## FIG 2B

$\overline{CF}$

## FIG 2C

DS

**FIG 3**